# DEMANDE DE BREVET EUROPEEN

(11) **EP 4 173 891 A1**
(43) Date de publication de la demande: **03.05.2023**
(21) Numéro de dépôt: 22204156.8
(22) Date de dépôt: 27.10.2022
(51) Int. Cl.: B60N 3/02, B60N 2/24, B60N 2/90, B61D 33/00

(54) **SIÈGE POUR VÉHICULE ET VÉHICULE DE TRANSPORT EN COMMUN COMPORTANT UN TEL SIÈGE**

(30) Priorité: 29.10.2021 FR 2111528
(71) Demandeur: SpeedInnov, 75008 Paris (FR)
(72) Inventeur: PAILLER, Christophe, 17180 PERIGNY (FR)
(74) Mandataire: Lavoix

(57) **Abrégé**

L'invention concerne un siège pour véhicule, comportant une assise (40), un dossier (45) et une poignée (50). La poignée (50) et le dossier (45) sont configurés pour fixer la poignée (50) au dossier (45) dans une première configuration et dans une deuxième configuration, la poignée (50) présentant une portion d'attache (70) et une portion de préhension (75), la portion d'attache (70) étant propre à fixer la poignée (50) au dossier (45) dans la première configuration et dans la deuxième configuration, la portion de préhension (75) s'étendant verticalement vers le haut à partir de la portion d'attache (70) entre une première extrémité (80) fixée à la portion d'attache (70) et une deuxième extrémité (85) dans la première configuration, et s'étendant verticalement vers le bas à partir de la portion d'attache (70) dans la deuxième configuration, la poignée (50) étant configurée pour qu'une personne agrippe la poignée (50) dans chaque configuration.

## Description

La présente invention concerne un siège pour un véhicule, ainsi qu'un véhicule de transport en commun comportant un tel siège.

Dans de nombreux types de véhicules, notamment des véhicules de transport en commun, des sièges sont équipés de poignées accessibles à des passagers qui se tiennent debout à proximité du siège, de manière à ce que ces passagers puissent s'aider du siège pour se tenir debout ou se stabiliser lors de leurs déplacements. De telles poignées sont en général disposées sur un côté du dossier, de manière à être accessibles pour un passager debout à côté du siège, et sont donc susceptibles de gêner le déplacement des passagers à proximité du siège si elles forment une saillie.

En conséquence, bien que ces poignées soient très utiles, de nombreuses contraintes existent sur leur dimensionnement et leur positionnement, de manière à minimiser la gêne que ces poignées occasionnent pour les usagers qui ne sont pas en train de les utiliser.

Cependant, il est à noter qu'un même siège est susceptible d'être adapté à de nombreuses configurations de véhicules, dans lesquelles les sièges sont placés à des hauteurs différentes par rapport à la zone où circulent les passagers (telles qu'un couloir entre deux rangées de sièges), par exemple si le sol de cette zone est surélevé ou surbaissé par rapport à la portion du sol où se trouvent les sièges.

Dans d'autres cas, l'assise et/ou le dossier peuvent être utilisées avec différents types d'autres éléments tels que des pieds ou une base du siège, qui modifient la hauteur de l'assise et/ou du dossier par rapport au sol.

La nécessité de prendre en compte toutes ces configurations possibles crée donc une contrainte importante pour la conception des poignées, qui doivent rester accessibles sans gêner outre mesure les passagers dans toutes leurs configurations

Aussi, il existe un besoin pour un siège, comportant une poignée, qui soit aisément adaptable à différentes configurations de véhicules, notamment à des configurations présentant différentes hauteurs du dossier par rapport au sol, sans gêner les passagers qui n'utilisent pas la poignée.

A cet effet, il est proposé un siège pour véhicule, notamment pour véhicule de transport en commun, comportant une assise, un dossier et une poignée, la poignée et le dossier étant configurés pour permettre la fixation de la poignée au dossier dans une première configuration et dans une deuxième configuration, la poignée présentant une portion d'attache et une portion de préhension, la portion d'attache étant propre à permettre la fixation de la poignée au dossier dans la première configuration et dans la deuxième configuration, la portion de préhension s'étendant verticalement vers le haut à partir de la portion d'attache entre une première extrémité fixée à la portion d'attache et une deuxième extrémité lorsque la poignée est dans la première configuration, et s'étendant verticalement vers le bas à partir de la portion d'attache lorsque la poignée est dans la deuxième configuration, la poignée étant configurée pour permettre à une personne circulant à proximité du siège d'agripper la poignée dans chacune de ses configuration.

Grâce à l'invention, la poignée peut être adaptée à différentes positions du dossier par rapport au sol où se trouvent des passagers debout, pour rester utilisable par ces derniers sans gêner leur mouvement, simplement en choisissant une configuration dans laquelle fixer la poignée au dossier du siège. Notamment, la portion d'attache peut être fixée dans la même zone du siège, et la portion de préhension s'étend vers le bas ou vers le haut selon les circonstances. Il n'est en particulier pas nécessaire de prévoir sur le dossier plusieurs emplacements différents où fixer la poignée, puisque le seul changement de configuration de la poignée modifie la hauteur du centre de celle-ci.

Selon des modes de réalisation avantageux mais non obligatoires, le siège présente une ou plusieurs des caractéristiques suivantes, prises isolément ou selon toutes les combinaisons techniquement possibles :
- une distance entre une extrémité inférieure du siège et la deuxième extrémité de la poignée lorsque la poignée est dans la deuxième configuration est strictement inférieure à une distance entre l'extrémité inférieure du siège et la première extrémité lorsque la poignée est dans la première configuration.
- la poignée dans la première configuration est superposable à la poignée dans la deuxième configuration par un mouvement comportant une rotation de la poignée autour d'un unique axe de rotation, notamment une rotation de 180 degrés, le mouvement comportant en outre optionnellement une translation de la poignée (50).
- l'axe de rotation traverse un même point de la portion d'attache dans chacune des deux configurations.
- la portion de préhension présente une longueur, entre ses deux extrémités, supérieure ou égale à 50 millimètres.
- le siège comporte des moyens de fixation de la poignée dans la première configuration, les moyens de fixation étant en outre configurés pour fixer la poignée au dossier dans la deuxième configuration.
- les moyens de fixation comportent au moins une vis accueillie conjointement dans la portion d'attache et dans le dossier.
- le dossier comporte une face d'appui et deux faces latérales, la face d'appui étant configurée pour permettre à un passager assis sur l'assise d'appuyer son dos contre la face d'appui, les deux faces latérales, ensemble, encadrant la face d'appui selon une direction horizontale, la poignée étant fixée à l'une des deux faces latérales dans chacune des deux configurations.

Il est également proposé un véhicule de transport en commun comportant au moins un siège tel que précédemment décrit.

Selon un mode de réalisation avantageux mais non obligatoire, le véhicule comporte au moins deux compartiments, chaque compartiment comportant au moins un siège, dans lequel chaque compartiment comporte un sol et est divisé en une première portion et une deuxième portion, chaque siège du compartiment étant contenu dans la première portion, la deuxième portion étant contigüe à la première portion et étant prévue pour permettre la circulation de passagers, une différence entre une hauteur du sol de la première portion et une hauteur du sol de la deuxième portion étant définie pour chaque compartiment, la différence de l'un des compartiments présentant une valeur différente de la différence de l'autre compartiment, la poignée de chaque siège du compartiment présentant la plus grande différence étant montée dans la deuxième configuration, la poignée de chaque siège de l'autre compartiment étant montée dans la première configuration.

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue en coupe partielle d'un premier exemple d'un compartiment de transport de passagers d'un véhicule transport en commun, comportant au moins un siège selon l'invention, et
- la figure 2 est une vue en coupe partielle d'un deuxième exemple d'un compartiment de transport de passagers d'un véhicule de transport en commun, comportant au moins un siège selon l'invention.

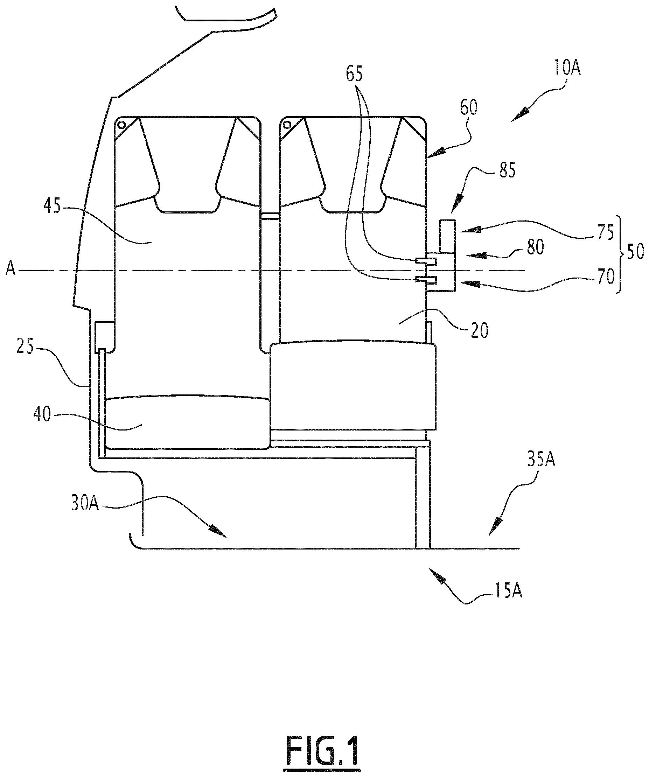

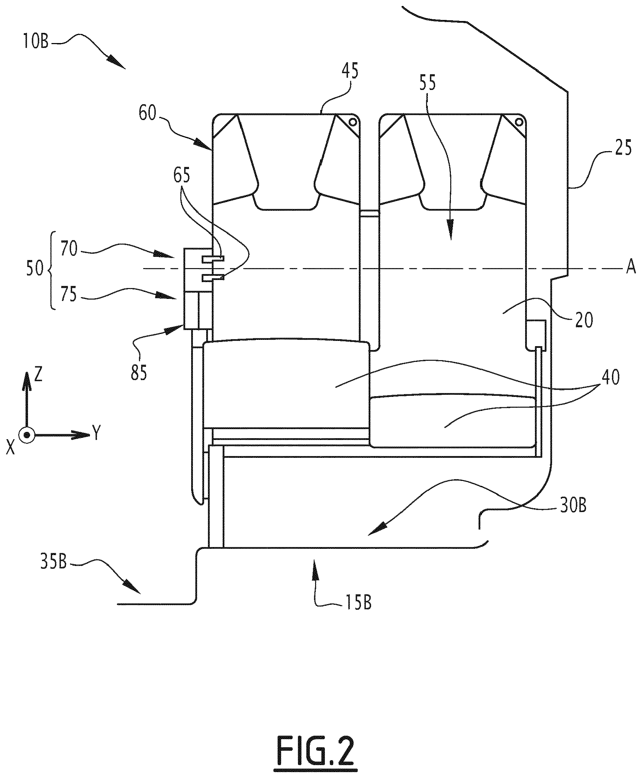

Un compartiment 10A, 10B d'un exemple de véhicule est représenté partiellement en coupe sur chacune des figures 1 et 2.

Le véhicule est, par exemple, un véhicule de transport en commun comportant au moins un compartiment 10A, 10B, notamment un compartiment 10A et un compartiment 10B.

Par exemple, le véhicule est un véhicule ferroviaire, notamment une voiture d'un train. En variante, le véhicule est un véhicule routier, notamment un bus.

Selon des modes de réalisation envisageables, le véhicule est un véhicule à deux étages superposés, comportant le compartiment 10A à un étage et le compartiment 10B à l'autre étage. Le compartiment 10 A est, par exemple, situé à l'étage supérieur parmi les deux étages.

Chaque compartiment 10A, 10B s'étend selon une direction longitudinale X, cette direction X étant notamment sensiblement horizontale lorsque le véhicule circule sur un sol horizontal.

La direction longitudinale X est, par exemple, la direction selon laquelle le véhicule 10 est prévu pour se déplacer.

Il est également défini une direction transversale Y et une direction verticale Z, perpendiculaires les unes aux autres et à la direction longitudinale X.

Chaque compartiment 10A, 10B comporte un sol 15A, 15B, au moins un siège 20, notamment un ensemble de sièges 20, et est délimité par des parois 25.

Chaque compartiment 10A, 10B comporte, notamment, une première portion 30A, 30B et une deuxième portion 35A, 35B.

Chaque siège 20 est contenu dans une première portion 30A, 30B d'un compartiment, chaque deuxième portion 35A, 35B étant dépourvue de siège 20. Chaque siège 20 est, par exemple, fixé au sol 15A, 15B de la première portion 30A, 30B correspondante.

En particulier, chaque deuxième portion 35A, 35B est prévue pour accueillir des passagers debout, notamment pour permettre la circulation de passagers debout dans la deuxième portion 35A, 35B.

Chaque deuxième portion 35A, 35B est notamment contigüe à la première portion 30A, 30B du même compartiment 10A, 10B, de manière à permettre à des passagers de rejoindre la deuxième portion 30A, 30B en circulant dans la deuxième portion 35A, 35B. Par exemple, chaque deuxième portion 35A, 35B est un couloir desservant une ou plusieurs rangées de sièges du compartiment 15A, 15B correspondant.

Il est défini une différence pour chaque compartiment 10A, 10B. La différence est une différence entre une hauteur, selon la direction verticale Z, de la partie du sol 15A, 15B correspondant à la première portion 30A, 30B du compartiment 10A, 10B et une hauteur de la partie du sol 15A, 15B correspondant à la deuxième portion 35A, 35B du compartiment 10A, 10B. Chaque hauteur est mesurée à partir d'un point de référence commun, par exemple, un point d'une voie sur laquelle le véhicule circule.

La différence du premier compartiment 10A est différente de celle du deuxième compartiment 10B. Par exemple, la différence correspondant au premier compartiment 10A est égale à zéro, tandis que celle du deuxième compartiment 10B est strictement supérieure à zéro.

Une différence supérieure à zéro indique que le sol de la première portion 30A, 30B est situé au-dessus du sol de la deuxième portion 35A, 35B.

La différence pour le compartiment 10B est, par exemple, comprise entre 100 millimètres (mm) et 200 mm.

Il est à noter que les valeurs des différences sont susceptibles de varier d'un mode de réalisation à un autre.

Chaque siège 20 est configuré pour accueillir un passager assis sur le siège.

Selon le mode de réalisation représenté sur les figures, les sièges 20 sont disposés par paires côte à côte, un siège 20 étant interposé entre l'autre siège 20 de la même paire et la deuxième portion 35A, 35B, les deux sièges de la même paire étant décalés l'un par rapport à l'autre selon la direction transversale Y.

Chaque siège 20 comporte une assise 40, un dossier 45 et, optionnellement, une poignée 50.

L'assise 40 est configurée pour supporter le passager assis sur le siège 20.

L'assise 40 est, par exemple, mobile en rotation entre une position abaissée dans laquelle l'assise 40 est prévue pour supporter un passager assis et une position relevée dans laquelle l'assise 40 s'étend sensiblement verticalement.

Le dossier 45 est configuré pour qu'un passager assis sur l'assise 40 appuie son dos contre le dossier 45.

Le dossier 45 s'étend vers le haut à partir de l'assise 40.

Le dossier 45 présente une face avant 55, deux faces latérales 60 et une face arrière.

La face avant 55 et la face arrière délimitent le dossier 45 selon une direction d'appui du dos du passager contre le dossier 45, cette direction étant par exemple la direction longitudinale X ou la direction transversale Y. Dans l'exemple représenté sur les figures, la direction d'appui est la direction X.

La face avant 55 est la face contre laquelle le passager est prévu pour appuyer son dos lorsque le passager est assis sur l'assise 40. La face avant 55 comporte, par exemple, un ou plusieurs coussin(s).

Les faces latérales 60 délimitent le dossier 50 selon une direction latérale perpendiculaire à la direction d'appui et à la direction verticale Z. En particulier, les faces latérales 60, ensemble, encadrent la face avant 55 selon cette direction latérale.

Dans l'exemple représenté sur les figures, la direction latérale est la direction transversale Y.

Au moins un siège 20 comporte une poignée 50. Par exemple, chaque siège 20 contigu à une deuxième portion 35A, 35B d'un compartiment 10A, 10B comporte une poignée 50. Il est entendu par « contigu » un siège 20 disposé de telle manière qu'aucun autre siège 20 n'est interposé entre le siège 20 et la deuxième portion 35A, 35B et le siège 20 considéré.

Chaque poignée 50 est configurée pour être fixée au dossier 45 du siège 20 correspondant. En particulier, chaque poignée est configurée pour être fixée à une face latérale du dossier 45.

Lorsque la poignée 50 est fixée à une face latérale 60, la poignée 50 s'étend selon la direction latérale à partir de la face latérale 60. La poignée 50 s'étend notamment en direction de la deuxième portion 35A, 35B ou dans la deuxième portion 35A, 35B.

En particulier, chaque poignée 50 est prévue pour coopérer avec le dossier 45 pour fixer la poignée 50 au dossier 45 dans une première configuration et dans une deuxième configuration.

En d'autres termes, le siège 20 comporte des moyens de fixation de la poignée 50 au dossier 45, les moyens étant portés par la poignée 50 et/ou par le dossier 45.

Dans chacune de ses configurations, la poignée 50 est configurée pour être agrippée, c'est-à-dire empoignée de la main, par un passager circulant à proximité du siège 20, notamment par un passager présent dans la deuxième portion 35A, 35B.

Les moyens de fixation sont notamment configurés pour permettre de fixer la poignée 50 au dossier 45 dans la première configuration et dans la deuxième configuration, au choix. Cela implique notamment qu'une même poignée peut être fixée indifféremment au dossier dans la première configuration ou dans la deuxième configuration.

En particulier, les mêmes moyens de fixation sont propres à fixer la poignée 50 dans la première configuration et dans la deuxième configuration.

Les moyens de fixation comportent, par exemple, une ou plusieurs vis 65 accueillie(s) conjointement dans le dossier 45 et dans la poignée 50 pour fixer cette dernière au dossier 45.

La poignée 50 est représentée dans la première configuration sur la figure 1, et dans la deuxième configuration sur la figure 2.

Chaque poignée 50 du premier compartiment 10A est, par exemple, fixée au siège 20 correspondant dans la première configuration, et chaque poignée 50 du deuxième compartiment 10B est fixée dans sa deuxième configuration.

La poignée 50, lorsqu'elle est dans la première configuration, est par exemple superposable par un mouvement comportant une rotation autour d'un unique axe A de rotation, et comportant optionnellement une translation, à la poignée 50 dans la deuxième configuration.

La rotation est, par exemple, une rotation de 180 degrés. Cependant, d'autres valeurs d'angles de rotation sont possibles.

L'axe de rotation A est, notamment, parallèle à la direction latérale du dossier 45.

L'axe de rotation A traverse, par exemple, un même point de la poignée 50 dans les deux configurations.

Par exemple, les moyens de fixation comportent un unique élément 65, tel qu'une vis, accueilli conjointement dans la poignée 50 et dans le dossier 45. Dans ce cas, l'élément 65 s'étend selon l'axe de rotation A et la poignée 50 est basculée de sa première à sa deuxième configuration en pivotant autour de l'élément. Par exemple, la poignée 50 est susceptible d'être déplacée de sa première configuration à la deuxième configuration en desserrant la vis, en faisant pivoter la poignée autour de la vis puis en resserrant la vis.

En variante, les moyens de fixation comportent un premier élément 65 et un deuxième élément 65, le premier élément 65 étant accueilli dans un premier trou du dossier 45 et le deuxième élément 65 dans un deuxième trou du dossier 45 lorsque la poignée 50 est dans la première configuration, le premier élément 65 étant accueilli dans le deuxième trou et le deuxième élément 65 dans le premier trou lorsque la poignée 50 est dans la deuxième configuration.

Il est à noter que d'autres moyens de fixation que des éléments 65 accueillis conjointement dans la poignée 50 et dans le dossier 45 sont envisageables. Par exemple, la poignée 50 comporte une ou plusieurs protrusions coopérant avec des éléments complémentaires du dossier 45.

La poignée 50 est, par exemple, au moins partiellement réalisée en un matériau métallique tel que l'acier, le magnésium ou l'aluminium, ou encore en un matériau plastique ou composite.

La poignée 50 est, par exemple, monobloc.

Selon des modes de réalisation envisageables, la poignée 50 est peinte ou colorée d'une couleur contrastant avec une couleur du dossier 45.

La poignée 50 comprend une portion d'attache 70 et une portion de préhension 75.

La portion d'attache 70 est propre à permettre la fixation de la poignée 50 dans la première et la deuxième configuration. Par exemple, le ou les éléments 65 sont accueillis conjointement dans la portion d'attache 70 et dans le dossier 45, notamment dans un ou des trous correspondants ménagés dans une face latérale 60.

La portion d'attache 70 s'étend, par exemple, selon une direction d'extension du dossier 45 lorsque la poignée 50 est dans l'une ou l'autre de ses deux configurations.

La portion d'attache 70 présente une longueur, mesurée selon la direction selon laquelle la portion d'attache 70 s'étend. Cette longueur est, par exemple, comprise entre 50 mm et 100 mm.

La portion d'attache 70 présente une épaisseur, mesurée selon la direction latérale, et comprise par exemple entre 20 mm et 50 mm.

La portion d'attache 70 présente une largeur, mesurée selon la direction d'appui, et comprise par exemple entre 20 mm et 50 mm.

La potion de préhension 75 s'étend à partir de la portion d'attache 70.

La portion de préhension 75 présente une première extrémité 80 et une deuxième extrémité 85 et s'étend entre ses deux extrémités 80 et 85.

La première extrémité 80 est fixée à la portion d'attache 70, par exemple venue de matière avec la portion d'attache 70.

Lorsque la poignée 50 est dans la première configuration, la portion de préhension 75 s'étend verticalement vers le haut à partir de la portion d'attache 70, comme visible sur la figure 1.

Il est entendu par « s'étend verticalement vers le haut » que, lorsque la poignée 50 est dans la première configuration, la première extrémité 80 est située verticalement au-dessous de la deuxième extrémité 85. Cette expression couvre notamment des cas où, dans la première configuration, un segment de droite reliant les extrémités 80 et 85 l'une à l'autre est parallèle à la direction verticale Z, mais aussi des cas où ce segment forme un angle non nul avec cette direction Z.

Un angle entre le segment de droite reliant les extrémités 80 et 85 l'une à l'autre et la direction verticale Z est, par exemple, compris entre 0 et 30 degrés (°), notamment entre 0 et 15 °, par exemple inférieur ou égal à 5°.

Lorsque la poignée 50 est dans la deuxième configuration, la portion de préhension 75 s'étend verticalement vers le bas à partir de la portion d'attache 70, comme visible sur la figure 2.

Il est entendu par « s'étend verticalement vers le bas » que, lorsque la poignée 50 est dans la deuxième configuration, la première extrémité 80 est située verticalement au-dessus de la deuxième extrémité 85. Cette expression couvre notamment des cas où, dans la première configuration, un segment de droite reliant les extrémités 80 et 85 l'une à l'autre est parallèle à la direction verticale Z, mais aussi des cas où ce segment forme un angle non nul avec cette direction Z.

Un angle entre le segment de droite reliant les extrémités 80 et 85 l'une à l'autre et la direction verticale Z est, par exemple, compris entre 0 et 30 degrés (°), notamment entre 0 et 15 °, par exemple inférieur ou égal à 5°.

La portion de préhension 75 présente une longueur, mesurée selon la direction selon laquelle la portion de préhension 75 s'étend entre les extrémités 80 et 85. Cette longueur est, par exemple, comprise entre 50 mm et 100 mm, notamment supérieure ou égale à 50 mm, en particulier égale à 65 mm.

La portion de préhension 75 présente une épaisseur, mesurée selon la direction latérale, et comprise par exemple entre 20 mm et 50 mm.

La portion de préhension 75 présente une largeur, mesurée selon la direction d'appui, et comprise par exemple entre 20 mm et 50 mm.

Lorsque la poignée 50 est dans la première configuration, une distance, selon la direction verticale Z, entre l'extrémité 85 et une extrémité inférieure du siège 20, est strictement supérieure à une distance, selon la direction verticale Z, entre l'extrémité 80 et l'extrémité inférieure du siège 20 lorsque la poignée 50 est dans la deuxième configuration.

Lorsque la poignée 50 est dans la première configuration, l'extrémité 85 est disposée à une hauteur, par rapport au sol de la deuxième portion 35A, comprise entre 900 mm et 1000 mm.

Lorsque la poignée 50 est dans la deuxième configuration, une extrémité inférieure de la poignée 50, notamment une extrémité inférieure de la portion de préhension 70, est disposée à une hauteur, par rapport au sol de la deuxième portion 35B, comprise entre 900 mm et 1000 mm.

Grâce à l'utilisation d'une poignée comportant des portions 70 et 75 et susceptible d'être fixée dans ses deux configurations, la poignée 50 peut être adaptée à différentes positions du dossier 45 par rapport au sol où se trouvent des passagers debout, pour rester utilisable par ces derniers sans gêner leur mouvement, simplement en choisissant une configuration dans laquelle fixer la poignée 50 au dossier 45 du siège 20. Notamment, la portion d'attache 70 peut être fixée dans la même zone du siège 20, et la portion de préhension 75 s'étend vers le bas ou vers le haut selon les circonstances. Il n'est en particulier pas nécessaire de prévoir sur le dossier 45 plusieurs emplacements différents où fixer la poignée 50, puisque le seul changement de configuration de la poignée 50 modifie la hauteur du centre de celle-ci.

Des poignées 50 dont les configurations diffèrent par une rotation de la poignée, notamment une rotation de 180 °, permettent d'assurer que la poignée 50 remplit sa fonction dans les deux configurations, et sont réalisable par des moyens simples tels qu'une ou deux vis par exemple.

Une portion 75 présentant une longueur de 50 mm ou plus permet d'adapter la poignée 50 à des sièges 20 disposés à des hauteurs très différentes par rapport au plancher où marchent les passagers, et est facile à attraper ou ceux-ci.

L'invention est particulièrement adaptée à des véhicules dans lesquels la différence entre les hauteurs des sols des portions 30A, 30B et 35A, 35B diffèrent d'un compartiment 10A, 10B à un autre.

## Revendications

1. Véhicule de transport en commun, comportant au moins deux compartiments (10A, 10B), chaque compartiment (10A, 10B) comprenant au moins un siège (20) comportant une assise (40), un dossier (45) et une poignée (50),
le siège (20) étant **caractérisé en ce que** la poignée (50) et le dossier (45) sont configurés pour permettre la fixation de la poignée (50) au dossier (45) dans une première configuration et dans une deuxième configuration, la poignée (50) présentant une portion d'attache (70) et une portion de préhension (75), la portion d'attache (70) étant propre à permettre la fixation de la poignée (50) au dossier (45) dans la première configuration et dans la deuxième configuration,
la portion de préhension (75) s'étendant verticalement vers le haut à partir de la portion d'attache (70) entre une première extrémité (80) fixée à la portion d'attache (70) et une deuxième extrémité (85) lorsque la poignée (50) est dans la première configuration, et s'étendant verticalement vers le bas à partir de la portion d'attache (70) lorsque la poignée (50) est dans la deuxième configuration, la poignée (50) étant configurée pour permettre à une personne circulant à proximité du siège (20) d'agripper la poignée (50) dans chacune de ses configurations,
dans lequel chaque compartiment comporte un sol (15A, 15B) et est divisé en une première portion (30A, 30B) et une deuxième portion (35A, 35B), chaque siège (20) du compartiment (10A, 10B) étant contenu dans la première portion (30A, 30B), la deuxième portion (35A, 35B) étant contigüe à la première portion (30A, 30B) et étant prévue pour permettre la circulation de passagers, une différence entre une hauteur du sol (15A, 15B) de la première portion (30A, 30B) et une hauteur du sol de la deuxième portion (35A, 35B) étant définie pour chaque compartiment (10A, 10B), la différence de l'un des compartiments (10A, 10B) présentant une valeur différente de la différence de l'autre compartiment (10A, 10B), la poignée (50) de chaque siège du compartiment (10A, 10B) présentant la plus grande différence étant montée dans la deuxième configuration, la poignée (50) de chaque siège de l'autre compartiment (10A, 10B) étant montée dans la première configuration.

2. Véhicule selon la revendication 1, dans lequel une distance entre une extrémité inférieure du siège (20) et la deuxième extrémité (85) de la poignée (50) lorsque la poignée (50) est dans la deuxième configuration est strictement inférieure à une distance entre l'extrémité inférieure du siège (20) et la première extrémité (80) lorsque la poignée (50) est dans la première configuration.

3. Véhicule selon la revendication 1 ou 2, dans lequel la poignée (50) dans la première configuration est superposable à la poignée (50) dans la deuxième configuration par un mouvement comportant une rotation de la poignée (50) autour d'un unique axe de rotation (A), notamment une rotation de 180 degrés, le mouvement comportant en outre optionnellement une translation de la poignée (50).

4. Véhicule selon la revendication 3, dans lequel l'axe de rotation (A) traverse un même point de la portion d'attache (70) dans chacune des deux configurations.

5. Véhicule selon l'une quelconque des revendications précédentes, dans lequel la portion de préhension (75) présente une longueur, entre ses deux extrémités (80, 85), supérieure ou égale à 50 millimètres.

6. Véhicule selon l'une quelconque des revendications précédentes, dans lequel le siège (20) comporte des moyens (65) de fixation de la poignée (50) dans la première configuration, les moyens de fixation (65) étant en outre configurés pour fixer la poignée (50) au dossier (45) dans la deuxième configuration.

7. Véhicule selon la revendication précédente, dans lequel les moyens de fixation (65) comportent au moins une vis (65) accueillie conjointement dans la portion d'attache (70) et dans le dossier (45).

8. Véhicule selon l'une quelconque des revendications précédentes, dans lequel le dossier (45) comporte une face d'appui (55) et deux faces latérales (60), la face d'appui (55) étant configurée pour permettre à un passager assis sur l'assise (40) d'appuyer son dos contre la face d'appui (55), les deux faces latérales (60), ensemble, encadrant la face d'appui (55) selon une direction horizontale (Y), la poignée (50) étant fixée à l'une des deux faces latérales (60) dans chacune des deux configurations.
